# EUROPEAN PATENT SPECIFICATION

(11) **EP 1 554 173 B1**
(45) Date of publication and mention of the grant of the patent: **26.04.2006**
(21) Application number: 03795097.9
(22) Date of filing: 12.09.2003
(51) Int. Cl.: B63B 1/00

(54) **SCREEN STOWING ARRANGEMENT FOR A BOAT**
FLACHSCHIRMVERSTAUUNGSVORRICHTUNG FÜR EIN BOOT
DISPOSITIF D'ESCAMOTAGE D'UN ECRAN DANS UN BATEAU

(30) Priority: 12.09.2002 GB 0221204
(43) Date of publication of application: 20.07.2005
(73) Proprietor: Sealine International Limited, Kidderminster, Worcestershire DY10 1HT (GB)
(72) Inventor: HAYES, Kevin, Sealine International Limited, Kidderminster, Worcestershire DY10 1HT (GB); HALL, John William, Sealine International Limited, Kidderminster, Worcestershire DY101HT (GB)
(74) Representative: Price, Paul Anthony King
(86) International application number: PCT/GB2003/003981
(87) International publication number: WO 2004/024551

(56) References cited:
- EP-A- 0 962 169
- GB-A- 2 233 807
- US-A- 4 729 334
- US-A- 5 484 197
- US-A- 6 076 906

## Description

### BACKGROUND OF THE INVENTION

The invention relates generally to a boat and to improving the incorporation of a display device such as a television in a cabin of the boat.

It is desirable to be able to hide a television out of view when it is not being used. A television can be hidden in a cabinet, but the cabinet is almost as visually intrusive as the television itself, and can be an obvious giveaway that a television is being hidden out of view.

### SUMMARY OF THE INVENTION

According to the present invention, there is provided a boat comprising:
a hull having a deck;
a superstructure which is above the deck and includes a cabin having a door leading thereinto from the deck and a coaming up at least part of a side of the door,
a housing attached to the superstructure inside the cabin by the door, and
an elongate display device which has first and second opposite ends and a display screen and is slidably mounted on a sliding mechanism inside the housing and the coaming such that the display screen is hidden and the first end of the display device is within the coaming and the second end is within the housing, wherein the display device is slidable out of the coaming and at least partially out of the housing so as to expose the display screen for viewing.

The present invention uses the coaming to provide part of the volume in which the display device, such as a flat screen television, is hidden. The coaming will be an area of the superstructure of localised greater thickness than adjacent wall areas of the superstructure, and the present invention takes advantage of this localised maximum thickness to hide part of the stowed display device, with the rest of the display device being hidden within the housing. The coaming adjacent to the side of the door may be a fairly substantial structure. It may for example be a moulding, possibly an integral part of a moulding forming a major part of the superstructure, with for example the external face of the moulded coaming incorporating a flight of steps which lead up from the deck to a raised bridge area above the cabin.

In our preferred embodiment, the sliding mechanism incorporates a latch which is releasable by pushing on the second end and biasing means for sliding out the unlatched display device to expose the display screen. The biasing means will therefore automatically deploy the display device once it has been unlatched, and the display device may be returned to its stowed position by pushing it back in against the force of the biasing means until the latch reactivates and locks the display device in its retracted position.

Preferably, the cabin includes a horizontal surface below the housing, and the display device is arranged to slide out just above the surface without touching the surface. In this way, the display device appears to be unsupported and to float just above the surface which may for example be a top surface of a storage unit up against a side wall of the cabin. The top surface may be at about waist height, so that when sitting down the deployed display device has its screen at a comfortable viewing height.

In our preferred embodiment, the coaming curves into the cabin in the upward direction and the housing in the sliding direction of the display device is deeper at the bottom of the housing than at the top of the housing. This imparts an unusual shape to the housing and helps to make it even less obvious that the housing is hiding the display device.

For example, the housing is generally triangular when viewed horizontally and perpendicular to the sliding direction of the display device. This is a visually attractive shape which is good at hiding the fact that a display device is concealed out of view.

In our preferred embodiment, the display device is arranged to slide fully out of the housing. The sliding may be arranged to stop at the point where the first end of the display device is just about to leave the housing. In this way, the display device is fully extended, but there is not the undesired factor of a gap being left through which a person inside the cabin can see into the housing.

Preferably, the sliding mechanism is provided on a rear face of the display device remote from a front face which has the display screen. This helps to hide from view how the display device is slidably supported, and makes the arrangement more intriguing to the user. For example, the arrangement may be such that the rear face of the display device faces an adjacent cabin wall or window when the display device is extended into the cabin. In this way, a viewer will not approach the extended display device from the rear so as to see the possibly unsightly functional nature of the sliding mechanism.

### BRIEF DESCRIPTION OF THE DRAWINGS

A preferred non-limiting embodiment of the present invention will now be described with reference to the accompanying diagrammatic drawings.
Fig. 1 is a perspective view of a first embodiment of the invention showing the display device hidden within its housing.
Fig. 2 is a view similar to Fig. 1, but showing the display device protruding from its housing.
Fig. 3 is a perspective view showing the rear face of the extended display device.
Fig. 4 is a front view looking towards the front face of the display device when stowed in its housing.

### DESCRIPTION OF THE PREFERRED EMBODIMENT

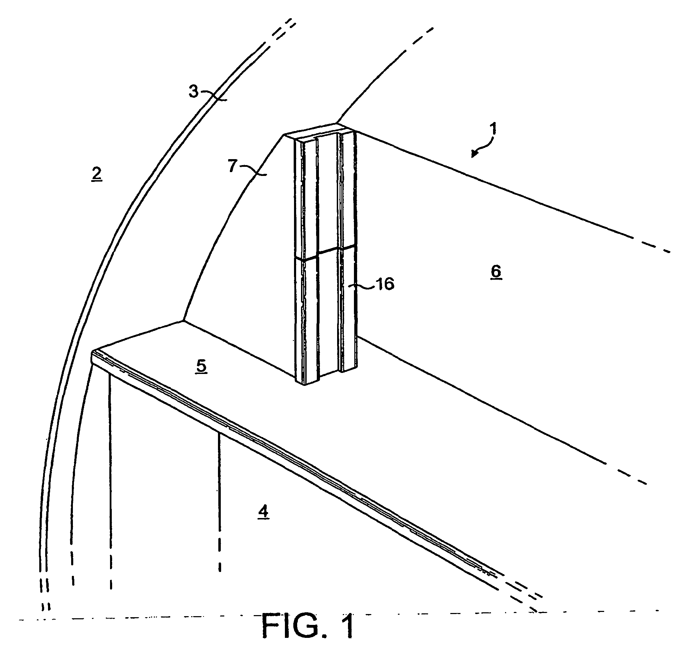

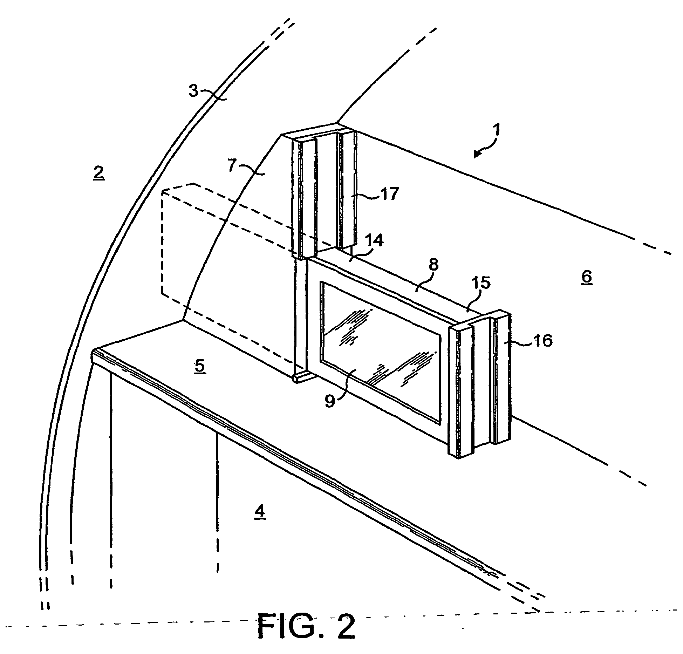

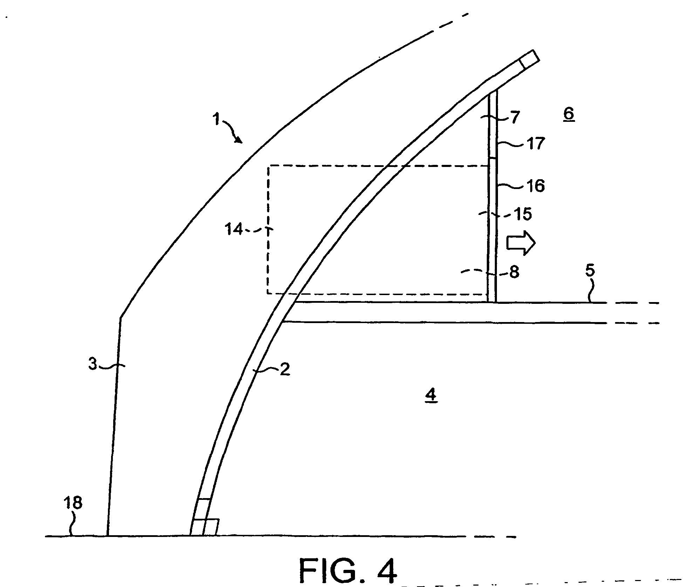

Figs. 1 and 2 are views from within a cabin of a boat in accordance with the present invention. The cabin is part of a superstructure 1 of the boat. The boat has a hull (not shown) having a deck 18 (see Fig. 4) above which the superstructure 1 extends. There is a door having a door aperture 2 which provides access from the deck into the cabin. The superstructure is mainly a GRP moulding and includes a moulded coaming 3 up one side of the door aperture 2. Within the cabin is a storage unit 4 having a top surface 5 and extending along a side wall 6 of the superstructure.

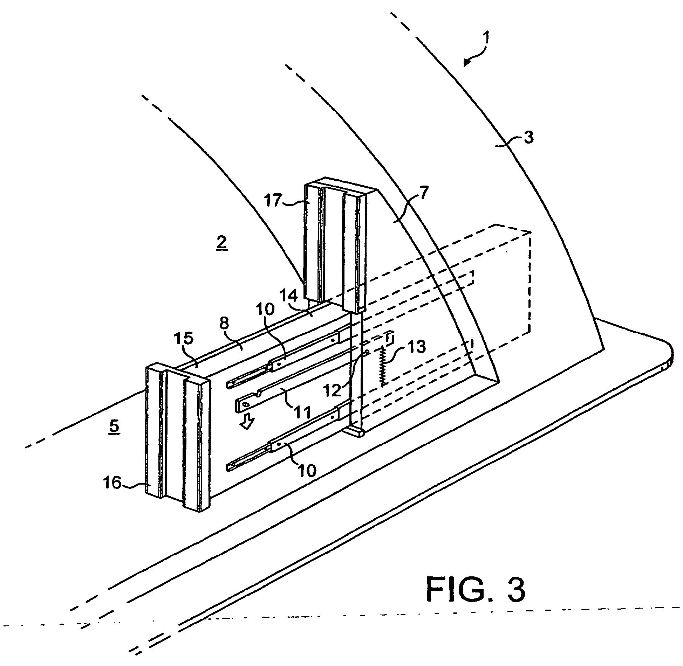

As may be seen from Figs. 3 and 4, the moulding is such that the coaming is moulded to have a significant depth in the longitudinal direction of the boat (the left to right direction in Fig. 4) and the coaming is considerably thicker than adjacent wall portions of the superstructure,

A generally triangular housing 7 projects into the cabin and is fitted into the gap between the top surface 5 and the coaming 3 which curves forwardly of the boat and into the cabin as it extends upwards (see Fig. 4). A display device 8 such as a flat screen television is slidably mounted in the housing 7 and has a screen 9 which faces into the cabin when the display device is extended for viewing.

The display device 8 is supported on a sliding mechanism (see Fig. 3) which comprises upper and lower drawer sliders 10 on the rear face of the display device 8. The drawer sliders 10 preferably incorporate or are associated with biasing means operative to push the display device 8 out of the housing 7. There is also a latching mechanism 11 which pivots about point 12 against a spring 13 such that, by slightly pushing in the display device 8 from its stowed position shown in Fig. 1, the latching mechanism is released and the drawer sliders 10 push the display device 8 out of the housing 7 to its deployed position as shown in Fig. 2 in which the screen 9 is exposed to be viewed.

By considering Fig. 4, it may be seen that, when the display device 8 is stowed, it has a first end 14 within the moulding forming the coaming 3 and a second end 15 which is within the housing 7. Thus advantage is taken of the localised significant depth or thickness of the coaming 3 to accommodate part of the volume of the display device 8, whilst the rest of the display device 8 is accommodated in the housing 7. The housing 7 need therefore be not as big as the display device 8 and can be given a visible external shape which does not conform to the shape of the display device itself. In this way, it is possible to disguise that the display device is hidden away. This is an advantage because the display device 8 is elongate and generally rectangular as it has the form of a standard type of flat screen television and any housing closely conforming to the external shape of the display device would be likely to give away the fact that the display device is being hidden therein. The designer of the internal layout and decor of the cabin is therefore given greater creative freedom.

When extended as in Fig. 2, the display device 8 is held slightly above the top surface 5 such that there is a gap therebetween in order that the display device will appear to float above the surface 5.

The second end 15 of the display device 8 may carry a decorative panel 16 which is in visual conformity with an adjacent decorative panel 17 of the housing 7. These panels 16,17 may match the decorative style elsewhere in the cabin.

## Claims

1. A boat comprising:
a hull having a deck (18);
a superstructure (1) which is above the deck (18) and includes a cabin having a door (2) leading thereinto from the deck and a coaming (3) up at least part of a side of the door;
a housing (7) attached to the superstructure (1) inside the cabin by the door (2); and
an elongate display device (8) which has first and second opposite ends (14,15) and a display screen (9) and is slidably mounted on a sliding mechanism (10) inside the housing (7) and the coaming (3) such that the display screen (9) is hidden and the first end (14) of the display device (8) is within the coaming (3) and the second end (15) is within the housing (7), wherein the display device (8) is slidable out of the coaming (3) and at least partially out of the housing (7) so as to expose the display screen (9) for viewing.

2. A boat according to Claim 1, wherein the sliding mechanism (10) incorporates a latch (11) which is releasable by pushing on the second end (15) and biasing means for sliding out the unlatched display device (8) to expose the display screen (9).

3. A boat according to Claim 1 or 2, wherein the cabin includes a horizontal surface (5) below the housing (7), and the display device (8) is arranged to slide out just above the surface (5) without touching the surface.

4. A boat according to any preceding claim, wherein the coaming (3) curves into the cabin in the upward direction and the housing (7) in the sliding direction of the display device (8) is deeper at the bottom of the housing than at the top of the housing.

5. A boat according to Claim 4, wherein the housing (7) is generally triangular when viewed horizontally and perpendicular to the sliding direction of the display device (8).

6. A boat according to any preceding claim, wherein the display device (8) is arranged to slide fully out of the housing (7).

7. A boat according to any preceding claim, wherein the sliding mechanism (10) is provided on a rear face of the display device (8) remote from a front face which has the display screen (9).

8. A boat according to Claim 7, wherein the rear face of the display device (8) faces an adjacent cabin wall (6) or window when the display device is extended into the cabin.

## Revendications

1. Bateau comprenant :
une coque ayant un pont (18) ;
une superstructure (1) qui se trouve sur le pont (18) et qui comprend une cabine avec une porte (2) menant à l'intérieur de celle-ci depuis le pont et un surbau (3) en haut faisant au moins partie d'un côté de la porte ;
un boîtier (7) attaché à la superstructure (1) à l'intérieur de la cabine par la porte (2) ;
et
une unité d'affichage allongée (8) munie de première et seconde extrémités opposées (14, 15) ainsi que d'un écran d'affichage (9) et monté de manière coulissante sur un mécanisme coulissant (10) à l'intérieur du boîtier (7) et du surbau (3) de sorte que l'écran d'affichage (9) soit caché, que la première extrémité (14) de l'unité d'affichage (8) soit dans le surbau (3) et que la seconde extrémité (15) soit dans le boîtier (7), **caractérisé en ce que** l'unité d'affichage (8) peut coulisser hors du surbau (3) et au moins partiellement hors du boîtier (7) de manière à laisser apparaître l'écran d'affichage (9) pour consultation.

2. Bateau selon la revendication 1, **caractérisé en ce que** le mécanisme coulissant (10) comprend un loquet (11) qui peut être détaché en appuyant sur la seconde extrémité (15) et des moyens de polarisation pour coulisser hors de l'unité d'affichage décliquetée (8) pour laisser apparaître l'écran d'affichage (9).

3. Bateau selon la revendication 1 ou 2, **caractérisé en ce que** la cabine comprend une surface horizontale (5) sous le boîtier (7) et l'unité d'affichage (8) est disposée pour sortir par coulissement juste au-dessus de cette surface (5) sans la toucher.

4. Bateau selon l'une quelconque des revendications précédentes, **caractérisé en ce que** le surbau (3) se courbe vers le haut dans la cabine et le boîtier (7) dans la direction de coulissement de l'unité d'affichage (8) est plus bas au fond du boîtier que sur son sommet.

5. Bateau selon la revendication 4, **caractérisé en ce que** le boîtier (7) est généralement triangulaire vu à l'horizontale et perpendiculaire dans la direction de coulissement de l'unité d'affichage (8).

6. Bateau selon l'une quelconque des revendications précédentes, **caractérisé en ce que** l'écran d'affichage (8) est disposé pour coulisser complètement hors du boîtier (7).

7. Bateau selon l'une quelconque des revendications précédentes, **caractérisé en ce que** le mécanisme coulissant (10) est prévu sur la face arrière de l'unité d'affichage (8) en étant éloigné d'une face avant qui comporte l'écran d'affichage (9).

8. Bateau selon la revendication 7, **caractérisé en ce que** la face arrière de l'unité d'affichage (8) est face à une paroi de cabine adjacente (6) ou à une fenêtre lorsque l'unité d'affichage s'étend dans la cabine.

## Patentansprüche

1. Ein Boot, welches umfaßt:
einen Rumpf, welcher ein Deck (18) aufweist,
einen Aufbau (1), welcher über dem Deck (18) angeordnet ist und eine Kajüte einschließt, welche eine Tür (2), die von dem Deck dorthinein führt, und ein Süll (3) an wenigstens einem Teil einer Seite der Tür aufweist,
eine Verschalung (7), die in der Kajüte an dem Aufbau (1) neben der Tür (2) angebracht ist, und
ein längliches Anzeigegerät (8), welches ein erstes und ein gegenüberliegendes zweites Ende (14, 15) und einen Bildschirm (9) aufweist, und welches verschiebbar auf einem Schiebemechanismus (10) im Inneren der Verschalung und des Sülls (3) gelagert ist, so daß der Bildschirm (9) verborgen ist und das erste Ende (14) des Anzeigegerätes (8) sich innerhalb des Sülls (3) befindet und das zweite Ende (15) innerhalb der Verschalung (7), wobei das Anzeigegerät (8) aus dem Süll (3) und wenigstens teilweise aus der Verschalung (7) heraus verschiebbar ist, um den Bildschirm zur Ansicht freizulegen.

2. Ein Boot gemäß Anspruch 1, **dadurch gekennzeichnet, daß** der Schiebemechanismus (10) eine Raste (11) einschließt, die durch Drücken auf das zweite Ende (15) lösbar ist und eine Vorspanneinrichtung, um das entsperrte Anzeigegerät (8) herauszuschieben, so daß der Bildschirm freigelegt wird.

3. Ein Boot gemäß Anspruch 1 oder 2, **dadurch gekennzeichnet, daß** die Kajüte eine horizontale Fläche (5) unterhalb der Verschalung (7) einschließt und das Anzeigegerät (8) so angeordnet ist, daß es genau über der Fläche (5) herausschiebbar ist, ohne die Fläche zu berühren.

4. Ein Boot gemäß einem der vorangehenden Ansprüche, **dadurch gekennzeichnet, daß** das Süll (3) sich in Aufwärtsrichtung in Richtung der Kajüte krümmt und die Verschalung (7) in Verschiebungsrichtung des Anzeigegerätes (8) am Boden tiefer ist als am oberen Ende.

5. Ein Boot gemäß Anspruch 4, **dadurch gekennzeichnet, daß** die Verschalung (7) bei horizontaler Ansicht senkrecht zu der Verschiebungsrichtung des Anzeigegerätes (8) im allgemeinen dreieckig ist.

6. Ein Boot gemäß einem der vorangehenden Ansprüche, **dadurch gekennzeichnet, daß** das Anzeigegerät (8) so angeordnet ist, daß es komplett aus der Verschalung (7) herausschiebbar ist.

7. Ein Boot gemäß einem der vorangehenden Ansprüche, **dadurch gekennzeichnet, daß** der Schiebemechanismus (10) auf einer Rückwand des Anzeigegerätes (8), entfernt von einer Stirnfläche, die den Bildschirm (9) aufweist, bereitgestellt wird.

8. Ein Boot gemäß Anspruch 7, **dadurch gekennzeichnet, daß** die Rückwand des Anzeigegerätes (8) einer benachbarten Kajütenwand (6) oder einem Fenster zugewandt ist, wenn das Anzeigegerät in die Kajüte ausgefahren wird.
